# EUROPEAN PATENT APPLICATION

(11) **EP 2 799 739 A1**
(43) Date of publication of application: **05.11.2014**
(21) Application number: 13154828.1
(22) Date of filing: 11.02.2013
(51) Int. Cl.: F16H 3/00, F16H 3/091, F16H 37/04, F16H 3/097

(54) **Dual clutch transmission**

(71) Applicant: TREMEC, 8210 Loppem (BE)
(72) Inventor: De Landtsheere, Jannick, 8310 Assebroek (BE)
(74) Representative: Prinz & Partner mbB

(57) **Abstract**

A dual clutch transmission (10) is provided, having a first input shaft (12), a second input shaft (14), an output shaft (18) and at least one auxiliary shaft (16), a first set of gear wheels (32) being arranged on the first input shaft (12) and a second set of gear wheels (38) being arranged on the second input shaft (14), the gear wheels (28, 30, 34, 36) of the first and second sets meshing with gear wheels on the auxiliary shaft (16) such that a set of odd transmission ratios (60) is formed with the gear wheels (28, 30) arranged on the first input shaft (12) and a set of even transmission ratios (62) is formed with the gear wheels (34, 36) arranged on the second input shaft (14). The auxiliary shaft (16) is provided with at least two range gear wheels (54, 56) which mesh with range gear wheels (50, 52) arranged on the output shaft (18). A drive-through coupling (48) is provided between one of the input shafts (12, 14) and the output shaft (18).

## Description

The invention relates to a dual clutch transmission having a first input shaft, a second input shaft, an output shaft and at least one auxiliary shaft, a first set of gear wheels being arranged on the first input shaft and a second set of gear wheels being arranged on the second input shaft, the gear wheels of the first and second sets meshing with gear wheels on the auxiliary shaft such that a set of odd transmission ratios is formed with the gear wheels arranged on the first input shaft and a set of even transmission ratios is formed with the gear wheels arranged on the second input shaft.

Dual clutch transmissions are well-known in the automotive industry. Current automotive dual clutch transmissions usually have six or seven forward gears, i.e. overall transmission ratios between one of the input shafts connected to the engine and the output shaft connected to the driven wheels. Two typical transmission layouts are a two-shaft design with one auxiliary shaft and a shorter three-shaft design with two auxiliary shafts. In the two-shaft design, a pair of gear wheels with a synchronizer is necessary for each gear. An additional pair of gear wheels is used to connect the auxiliary shaft with the output shaft. One gear wheel of each pair of gear wheels has to be accommodated on the auxiliary shaft which leads to a large overall length of the gear box. In the three-shaft design, the use of a second auxiliary shaft results in a shorter overall length. However, even in the three-shaft design, each gear needs a separate set of gear wheels with a synchronizer, leading to a large total number of parts.

In the automotive industry, it is an ongoing trend to increase the number of gears and the total spread of transmission ratios to reduce fuel consumption and CO₂ emissions. Adding more gears to the state of the art transmissions would require an extra pair of gear wheels with associated synchronizers on one of the auxiliary shafts. This would further increase the number of parts as well as the overall length of the gear box.

It is thus the object of the invention to provide a transmission which has a large number of available gears with a large spread of available transmission ratios while being compact and not requiring many mechanical parts.

In accordance with the present invention a dual clutch transmission of the above-mentioned kind is provided wherein the auxiliary shaft features at least two range gear wheels which mesh with range gear wheels arranged on the output shaft, and a drive-through coupling is provided between one of the input shafts and the output shaft. The two pairs of range gear wheels double the amount of available gears provided by the sets of gear wheels arranged on the input shafts, resulting in a transmission with fewer parts and smaller overall length without reducing the number of available gears. In fact, even more gears with fewer parts are possible. Furthermore, the drive-through coupling provides a gear that does not use the auxiliary shaft for torque transmission. With the transmission in this gear, the auxiliary shaft runs without load which allows for shifting the engagement of the pairs of range gear wheels. Thus the transmission ratio between the auxiliary shaft and the output shaft can be changed without interrupting the torque transmission to the output shaft.

The gear wheels on the first and second input shafts can be fixedly connected thereto, and the gear wheels meshing therewith are arranged as follower gear wheels which can be drivingly connected to the auxiliary shaft by means of a coupling, which allows for a simple way of changing the transmission ratio between the input shafts and the auxiliary shaft.

In an alternative embodiment, the gear wheels on the first and second input shafts can be formed as follower gears while the gear wheels associated with the auxiliary shaft are fixedly connected thereto.

In a preferred embodiment of the invention a coupling is provided for drivingly connecting at least one of the gear wheels of the odd transmission ratio to the auxiliary shaft, and a further coupling is provided for drivingly connecting at least one of the gear wheels of the even transmission ratios to the auxiliary shaft. With the use of at least two couplings on the auxiliary shaft, one for each set of gear wheels, an even and an odd gear wheel can be drivingly connected to the auxiliary shaft simultaneously, allowing for a gear shift without the loss of torque transmission to the output shaft.

Preferably the couplings are formed as synchronizing devices which allows for synchronizing the rotational speeds of a gear wheel and its associated shaft such that a smooth engagement of the respective gear wheel to its shaft can be achieved.

At least one of the synchronizing devices can be a double-sided synchronizing device which acts as two single-sided synchronizing devices, thus further reducing the amount of parts necessary.

At least one of the synchronizing devices can be a single-sided synchronizing device, allowing for more flexibility in shifting gears.

In another embodiment of the invention, the couplings are formed as a dog clutch, providing a simple and low-wear means for a detachable torque transmission.

In another preferred embodiment of the invention, a range selection coupling is provided for drivingly connecting at least one of the range gear wheels to the respective shaft. This allows changing the transmission ratio between the auxiliary shaft and the output shaft in a simple manner.

Preferably, the range selection coupling is arranged on the auxiliary shaft allowing for a range selection coupling to be located on the non-driven shaft, which simplifies shifting.

The range selection coupling can be a double-sided synchronizing device so that only one range selection coupling is needed.

According to a further embodiment of the invention, a set of reverse gear wheels is provided, allowing the reversal of the torque direction on the output shaft.

One of the reverse gear wheels can be arranged on one of the input shafts and a second of the reverse gear wheels can be arranged on the auxiliary shaft. In this configuration, two reverse gears are possible which are realized by the two different transmission ratios of the range gear wheels.

One of the reverse gear wheels can be arranged on the output shaft, and a second of the reverse gear wheels can be arranged on the auxiliary shaft, thus providing multiple reverse gears that are shiftable without the loss of torque transmission to the output shaft.

In another embodiment of the invention one of the range gears features a two-step reduction gear wheel set, achieving very short transmission ratios between the auxiliary shaft and the output shaft. This is of interest especially for SUVs and off-road vehicles in order to accommodate very short first and/or second gears for off-road driving. Furthermore, the total transmission ratio spread of the transmission can be increased significantly with a short transmission ratio between the auxiliary shaft and the output shaft, rendering it suitable for applications where fuel economy is of importance.

Preferably, the drive-through coupling is able to engage with the two-step reduction gear wheel set, realizing a short gear without the use of the auxiliary shaft.

According to a further embodiment, a second auxiliary shaft is provided, allowing for a more compact transmission design.

One of the auxiliary shafts can carry the gear wheels of the odd transmission ratios and the other of the auxiliary shafts can carry the gear wheels of the even transmission ratios, leading to an alternating use of the auxiliary shaft, which allows moving the couplings on the other, unloaded auxiliary shaft.

It is however not mandatory to group the odd and even gears to the different auxiliary shafts. Rather, each auxiliary shaft could carry odd and even gears.

Further features and advantages of the invention will be apparent from the following description of the embodiments and the attached drawings to which reference is made and in which:
- Figure 1 schematically shows the transmission according to the present invention,
- Figure 2 shows the transmission of Figure 1 with torque being transmitted via the first gear,
- Figure 3 shows the transmission of Figure 1 with torque being transmitted via the first gear and the respective gear wheel of the second gear being already engaged,
- Figure 4 shows the transmission of Figure 1 with torque being transmitted via the second gear,
- Figure 5 shows the transmission of Figure 1 with torque being transmitted via the second gear and the respective gear wheel of the third gear being already engaged,
- Figure 6 shows the transmission of Figure 1 with torque being transmitted via the third gear,
- Figure 7 shows the transmission of Figure 1 with torque being transmitted via the third gear and the respective gear wheel of the fourth gear being already engaged,
- Figure 8 shows the transmission of Figure 1 with torque being transmitted via the fourth gear,
- Figure 9 shows the transmission of Figure 1 with torque being transmitted via the fourth gear and the drive-through coupling being already engaged,
- Figure 10 shows the transmission of Figure 1 with torque being transmitted via the fifth gear,
- Figure 11 shows the transmission of Figure 1 with torque being transmitted via the fifth gear and a range selection coupling engaging a gear wheel of a second range selection transmission ratio and the respective gear wheel of the sixth gear being already engaged,
- Figure 12 shows the transmission of Figure 1 with torque being transmitted via the sixth gear,
- Figure 13 shows the transmission of Figure 1 with torque being transmitted via the sixth gear and the respective gear wheel of the seventh gear being already engaged,
- Figure 14 shows the transmission of Figure 1 with torque being transmitted via the seventh gear,
- Figure 15 shows the transmission of Figure 1 with torque being transmitted via the seventh gear and the respective gear wheel of the eighth gear being already engaged,
- Figure 16 shows the transmission of Figure 1 with torque being transmitted via the eighth gear,
- Figure 17 shows the transmission of Figure 1 in an idle position required to engage the gear wheels of the ninth gear,
- Figure 18 shows the transmission of Figure 1 with the ninth gear being used for torque transmission,
- Figure 19 shows a second embodiment of the transmission according to the invention,
- Figure 20 shows a third embodiment of the transmission according to the invention,
- Figure 21 shows a fourth embodiment of the transmission according to the invention, and
- Figure 22 shows a fifth embodiment of the transmission according to the invention.

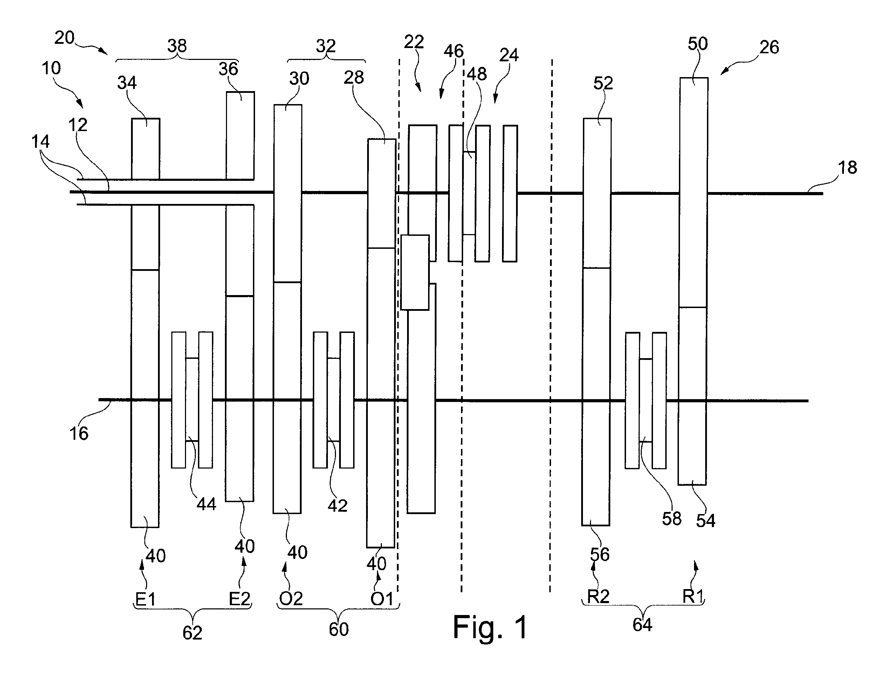

The transmission 10, shown schematically in Figure 1, comprises four shafts: A first input shaft 12, a second input shaft 14, an auxiliary shaft 16 and an output shaft 18.

The first input shaft 12 is an inner shaft surrounded by the second input shaft 14 designed as a hollow shaft. The first input shaft 12 is longer than the second input shaft 14 so that its end protrudes from the second input shaft 14. The input shafts 12, 14 are each connected to a clutch of a double clutch system (not shown) so that they can be driven separately by an engine (not shown).

The output shaft 18 is arranged concentrically with the first input shaft 12 and it is connected to the wheels to be driven.

The auxiliary shaft 16 extends parallel to the input shafts 12, 14 and the output shaft 18. It is arranged in a way that it extends side by side to the second input shaft 14, the first input shaft 12 and the output shaft 18.

Gear wheels and couplings are arranged on all four shafts 12, 14, 16, 18 in a way that the transmission 10 is divided into four sections, namely forward speed section 20, a reverse section 22, a direct forward speed section 24 and a range selection section 26.

In the forward speed section, two gear wheels 28, 30 are drivingly connected to the first input shaft 12. Gear wheel 28 and gear wheel 30 form a first set of gear wheels 32, the diameter of gear wheel 28 being smaller than the diameter of gear wheel 30.

Likewise, two gear wheels 34, 36 are drivingly connected to the second input shaft 14 and form a second set of gear wheels 38. The diameter of gear wheel 34 is smaller than that of gear wheel 36 and gear wheel 30, but larger than the diameter of gear wheel 28. The diameter of gear wheel 36 is larger than that of gear wheel 28, gear wheel 30 and gear wheel 34.

Four follower gear wheels 40 are arranged on bearings on the auxiliary shaft 16. Each of the follower gear wheels 40 meshes with one of the gear wheels 28, 30, 34, 36. Accordingly, the diameters of the follower gear wheels 40 are complementary to the diameters of the gear wheels 28, 30, 34, 36 with respect to the distance between the first input shaft 12 and the auxiliary shaft 16.

Two couplings 42, 44 are provided on the auxiliary shaft 16 in the forward speed section 20. Coupling 42 is arranged between the follower gear wheels 40 associated with the gear wheels 28, 30 of the first set of gear wheels 32 and is able to engage one of the adjacent follower gear wheels 40, providing a fixed connection between the engaged follower gear wheel 40 and the auxiliary shaft 16. Likewise, coupling 44 is arranged between the follower gear wheels 40 associated with the gear wheels 34, 36 of the second set of gear wheels 38 and it is able to establish a fixed connection between one of the adjacent follower gear wheels 40 and the auxiliary shaft 16. The couplings are formed as double-sided synchronizing devices which allow, when being actuated, to first adapt the rotational speeds of the shaft and the gear wheel to each other and to then couple the gear wheel to the shaft such that torque transmission is possible.

In the reverse section 22 of transmission 10, a set of reverse gear wheels 46 is located. The set of the reverse gear wheels 46 provides a torque reversing transmission between the first input shaft 12 and the auxiliary shaft 16 in a manner known to one skilled in the art. The gear wheel of the set of reverse gear wheels 46 associated with the auxiliary shaft 16 is drivingly connected with the auxiliary shaft 16. The gear wheel of the set of reverse gear wheels 46 associated with the first input shaft 12 is mounted on a bearing on the first input shaft 12 and can be drivingly connected to the first input shaft 12 by means of a coupling.

The ends of the first input shaft 12 and the output shaft 18 are located in the direct forward speed section 24 and are facing each other. A drive-through coupling 48 is located at the end of the first input shaft 12, and the end of output shaft 18 is formed for receiving the drive-through coupling 48. The drive-through coupling 48 is designed as a two-sided coupling and drivingly connects the first input shaft 12 with the output shaft 18. In this embodiment, the drive-through coupling 48 serves also as the aforementioned coupling to drivingly connect one of the gear wheels of the set of reverse gear wheels 46 to the first input shaft 12.

In the range selection section 26, two range gear wheels 50, 52 are arranged on the output shaft 18 and are drivingly connected thereto. Range gear wheel 50 and range gear wheel 52 have different diameters. Two additional range gear wheels 54, 56 are arranged on bearings on the auxiliary shaft 16. Range gear wheel 50 of the output shaft 18 meshes with the range gear wheel 54 on the auxiliary shaft 16. Likewise, the range gear wheel 52 on the output shaft 18 meshes with the range gear wheel 56 on the auxiliary shaft 16. A range selection coupling 58 is arranged on the auxiliary shaft between the range gear wheel 54 and the range gear wheel 56 and is designed to engage with either range gear wheel 54 or range gear wheel 56 and establish a driving connection between the auxiliary shaft and range gear wheel 54 or range gear wheel 56, respectively. It can also be in an uncoupled position, thus not engaging to any of the range gear wheels 54, 56.

The gear wheels 28, 30, 34, 36 of the first and second sets of gear wheels 32, 38 each provide, together with the associated follower gear wheel 40, a distinct transmission ratio between one of the input shafts 12, 14 and the auxiliary shaft 16. The gear wheels 28, 30 of the first set of gear wheels 32 form two odd transmission ratios 60. Likewise, the gear wheels 34, 36 of the second set of gear wheels 38 form two even transmission ratios 62.

The terms even and odd originate in the fact that in a prior art double clutch transmissions the first set of gear wheels 32 would provide the first and the third gear and the second set of gear wheels 38 the second and fourth gear. Unlike the prior art double clutch transmissions, in the transmission 10 the transmission ratio between the auxiliary shaft 16 and the output shaft 18 is not fixed but a choice of two range transmission ratios 64. The range transmission ratios 64 are provided by the range gear wheels 52, 54, 56, 58 in the range selection section 26, which form two pairs of gear wheels and thus two different transmission ratios between the auxiliary shaft 16 and the output shaft 18.

Using the even and odd transmission ratios 60, 62 in combination with the range transmission ratios 64 results in eight different gears, i.e. overall transmission ratios between one of the input shafts 12, 14 and the output shaft 18. With the drive-through coupling 48, another gear is added, making it nine forward gears in total that are provided by transmission 10. Furthermore, the set of reverse gear wheels 46 provides a reverse transmission ratio, which can also be doubled by the two range transmission ratios 64, leading to two reverse gears.

The transmission 10 with nine forward and two reverse gears comprises 15 gear wheels and four couplings, which can be double-sided or two one-sided synchronization devices. In comparison to prior art double clutch transmission with seven forward gears and one reverse gear the number of gear wheels needed is reduced by four or three compared with a two-shaft or three-shaft design, respectively. Simultaneously, the number of available gears is increased by three, underlining the advantages of the transmission 10 according to the invention.

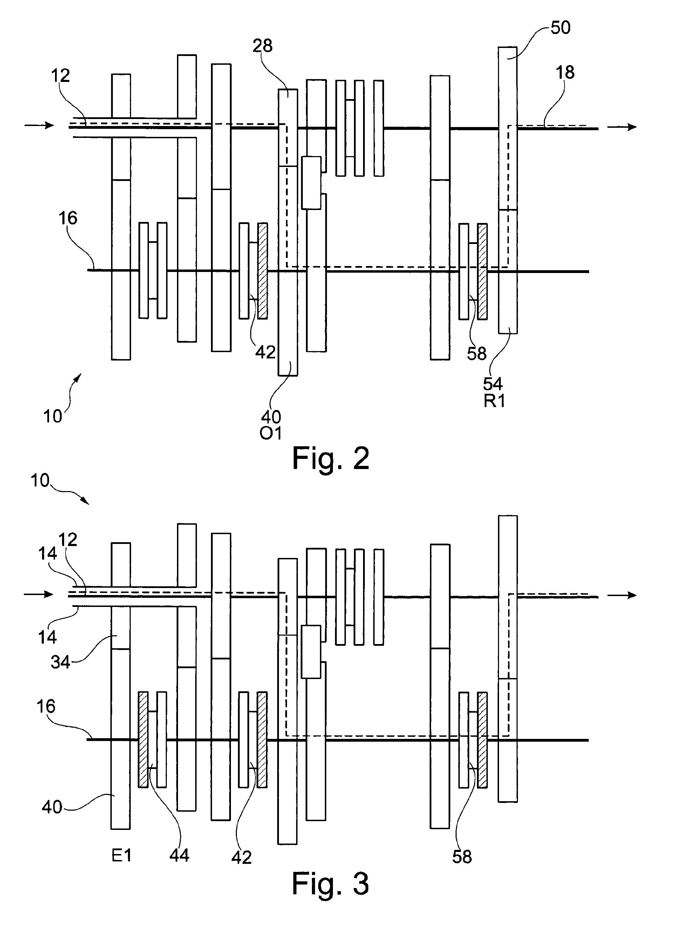

In Figures 2 to 18, different positions of the transmission 10 are shown relating to the different gears and the sequence of shifting the gears. For the sake of simplicity, the side of a coupling which is engaged with a gear wheel is highlighted with a hatching. Furthermore, the dashed line indicates the power flow through the transmission. Arrows pointing at the first input shaft 12 or the second input shaft 14 indicate that the respective input shaft is driven. Likewise an arrow pointing away from the output shaft 18 indicates that the output shaft 18 is driven and torque is transmitted to the wheels.

The shifting sequence of the first shift is describe in detail as an example for the other shifting sequences which are carried out in similar or identical fashion.

Figure 2 shows the transmission 10 in the position of the first gear which is used for transmitting torque from the input side of the transmission to the output side. Coupling 42 engages with the follower gear wheel 40 meshing with gear wheel 28, thus providing a driving connection between the follower gear wheel 40 meshing with the gear wheel 28 and the auxiliary shaft 16. The range selection coupling 58 is engaged with the range gear wheel 54 meshing with range gear wheel 50. Therefore, a driving connection between the range gear wheel 54 and the auxiliary shaft 16 is provided.

Thus, the first of the odd transmission ratios O1 is established between the first input shaft 12 and the auxiliary shaft 16. The transmission ratio between the auxiliary shaft 16 and the output shaft 18 is the first of the range transmission ratios R1.

A torque applied to the first input shaft 12 is thus transmitted via gear wheel 28 and the associated follower gear wheel 40 to the auxiliary shaft 16 and then via range gear wheel 54 to range gear wheel 50 and hence to the output shaft 18.

The first gear is therefore a combination of the transmission ratios O1 and R1 with a driven first input shaft 12.

Figure 3 shows the transmission 10 which still transmits torque via the first gear with a driven first input shaft 12 but which is being preparing for the shift into the second gear. This is done by engaging the coupling 44 with the follower gear wheel 40 which meshes with gear wheel 34. The coupling 44 therefore creates a connection between the second input shaft 14 and the auxiliary shaft 16 with a transmission ratio E1 corresponding to the first transmission ratio of the even transmission ratios 62. The positions of coupling 42 and range selection coupling 58 remain the same.

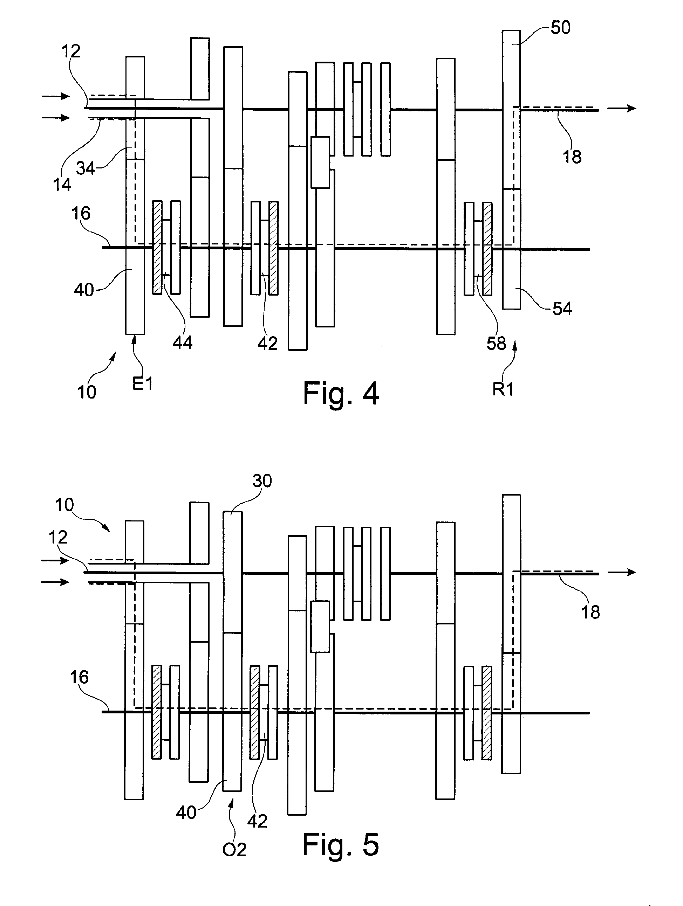

In Figure 4, the transmission 10 transmits torque via the second gear. The positions of the couplings 42, 44, 58 have not been changed with respect to Figure 3, but the torque input has been moved from the first input shaft 12 to the second input shaft 14. This can be achieved by disengaging the clutch connected to first input shaft 12 while simultaneously engaging the clutch connected to second input shaft 14 in a manner which provides uninterrupted torque transmission but prevents jamming of the transmission.

In the second gear, the torque is transmitted from the second input shaft 14 via gear wheel 34 and its associated follower gear wheel 40, through the auxiliary shaft 16 and to the output shaft 18 via the pair of range gear wheels 50, 54. Thus, the second gear is a combination of the transmission ratios E1 and R1.

In Figure 5, the transmission 10 still transmits torque via the second gear but the coupling 42 is moved in order to prepare the transmission 10 for a shift into the third gear. In this state the coupling 42 engages with the follower gear wheel 40 meshing with the gear wheel 30, thus establishing a transmission ratio 02 between the first input shaft 12 and the auxiliary shaft 16 corresponding to the second transmission ratio of the odd transmission ratios 60.

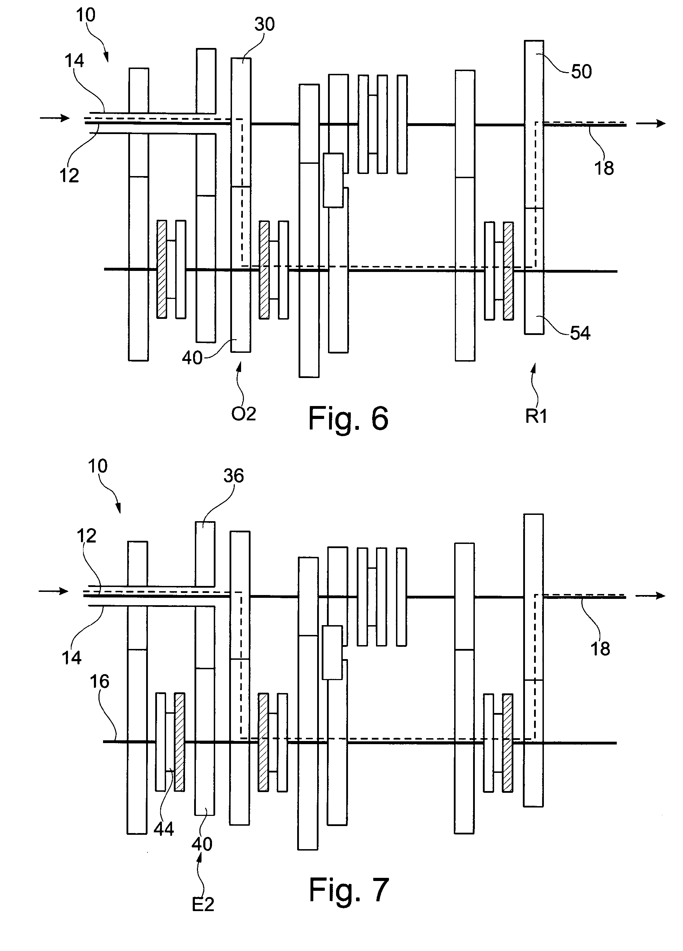

In Figure 6, the torque input was switched from the second input shaft 14 to the first input shaft 12 and the torque transmission is accomplished through gear wheel 30 and its associated follower gear wheel 40 and the pair of range gear wheels 50, 54. Thus, the third gear is a combination of the transmission ratios 02 and R1.

In Figure 7 the transmission 10 still transmits torque via the third gear but the coupling 44 is moved to prepare for shifting into the fourth gear. Coupling 44 now engages with the follower gear wheel 40 associated with gear wheel 36. Thus in this position the second input shaft 14 and the auxiliary shaft 16 are connected with the second of the even transmission ratios E2.

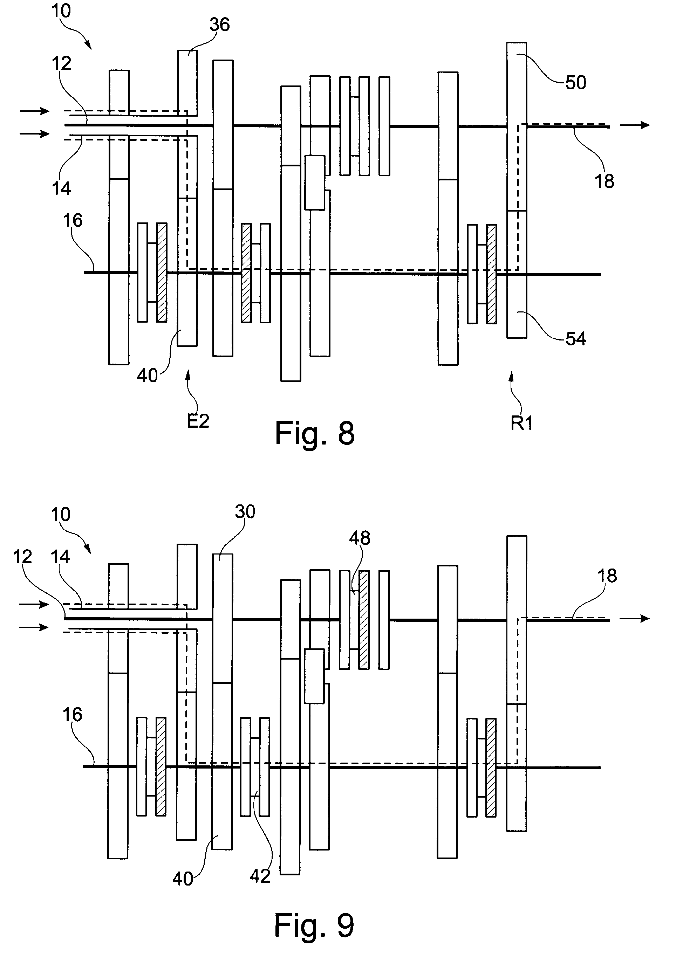

In Figure 8, the input torque has been changed back from the first input shaft 12 to the second input shaft 14 so that the torque transmission is accomplished by the second input shaft 14, the gear wheel 36 and its associated follower gear wheel 40, the auxiliary shaft 16, the pair of range gear wheels 50, 54 and the output shaft 18. The transmission 10 is engaged in the fourth gear which is a combination of the transmission ratios E2 and R1.

In Figure 9, the transmission 10 still transmits torque via the fourth gear but the coupling 42 and the drive-through coupling 48 are repositioned in order to prepare for the shift into the fifth gear. The coupling 42 is disengaged from the follower gear wheel 40 associated with gear wheel 30, disconnecting the first input shaft 12 from the auxiliary shaft 16. Also, drive-through coupling 48 is moved to engage with the output shaft 18 so that the first input shaft 12 and the output shaft 18 are drivingly connected without any reduction.

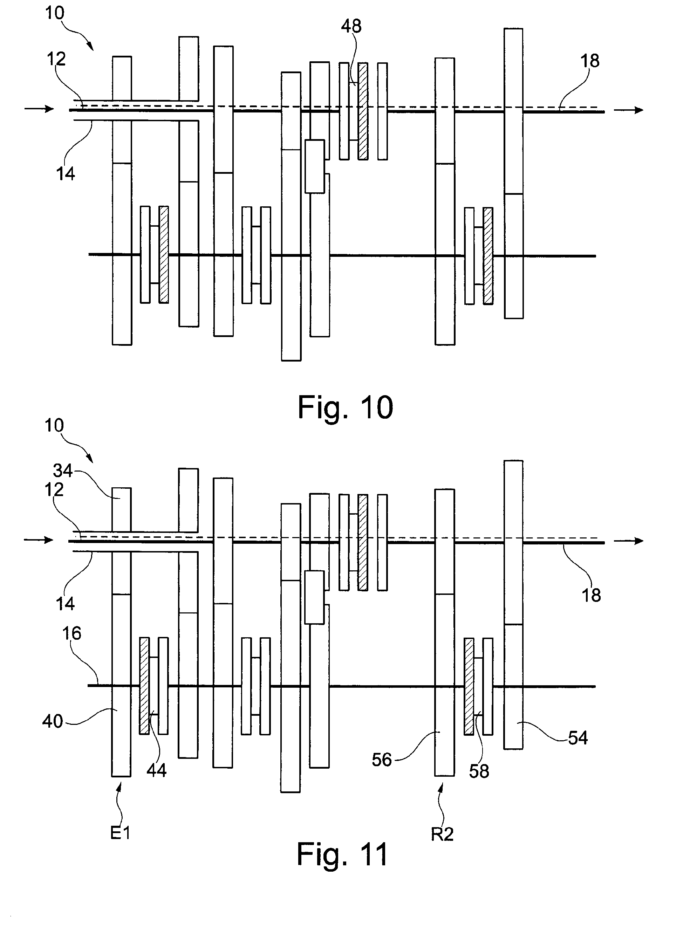

In order to shift into the fifth gear, the torque is inputted into the first input shaft 12. The torque is now transmitted directly from the first input shaft 12 to the output shaft 18 via the drive-through coupling 48, thus the fifth gear is direct (Fig. 10).

In Figure 11, the transmission 10 still transmits torque via the fifth gear but the coupling 44 and the range selection coupling 58 are moved in order to prepare for the shift into the sixth gear. At this point the transmission ratio of the range selection section 26 is changed. This is made possible because the auxiliary shaft 16 is not part of the torque transmission path in this gear. The change of the transmission ratio in the range selection section 26 is accomplished by disengaging the range selection coupling 58 from gear wheel 54 and engaging it with gear wheel 56. Thus, a transmission ratio R2 corresponding to the second of the range transmission ratios 64 is established between the auxiliary shaft 16 and the output shaft 18. In the same step coupling 44 is moved to engage with the follower gear wheel 40 meshing with gear wheel 34, establishing transmission ratio E1 between the second input shaft 14 and the auxiliary shaft 16.

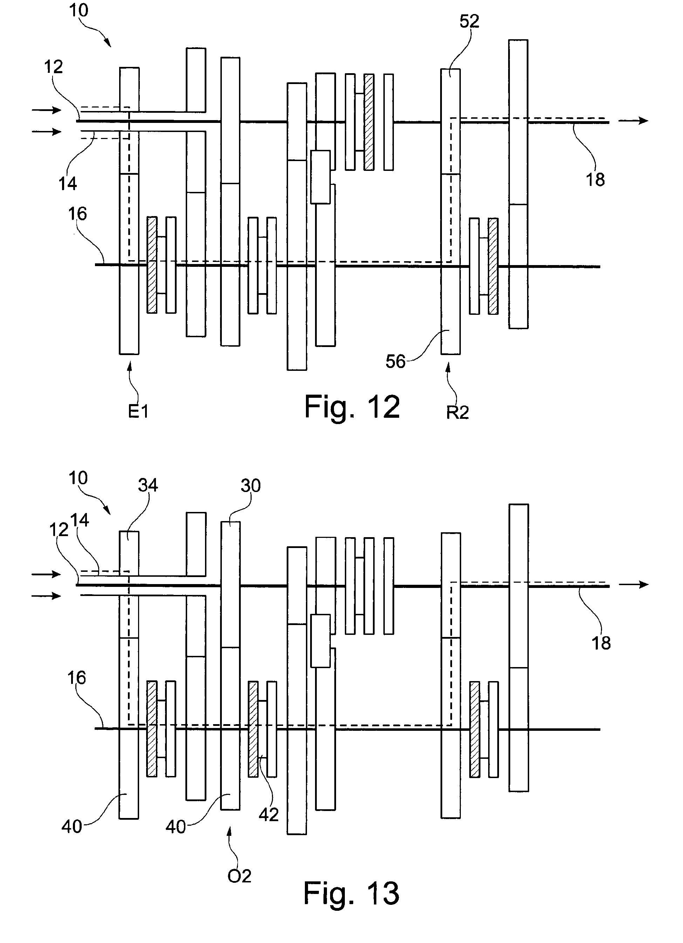

The transmission 10 is shifted into the sixth gear by changing the torque input from the first input shaft 12 to the second input shaft 14 (Fig. 12). Now the auxiliary shaft 16 is driven again with the transmission ratio E1 by the second input shaft 14. Contrary to the second gear, the pair of range gear wheels 52, 56 is used to transmit the torque from the auxiliary shaft 16 to the output shaft 18 so that the transmission ratio E1 in the forward speed section 20 can be used a second time to form another gear. Thus, the sixth gear is a combination of the transmission ratios E1 and R2.

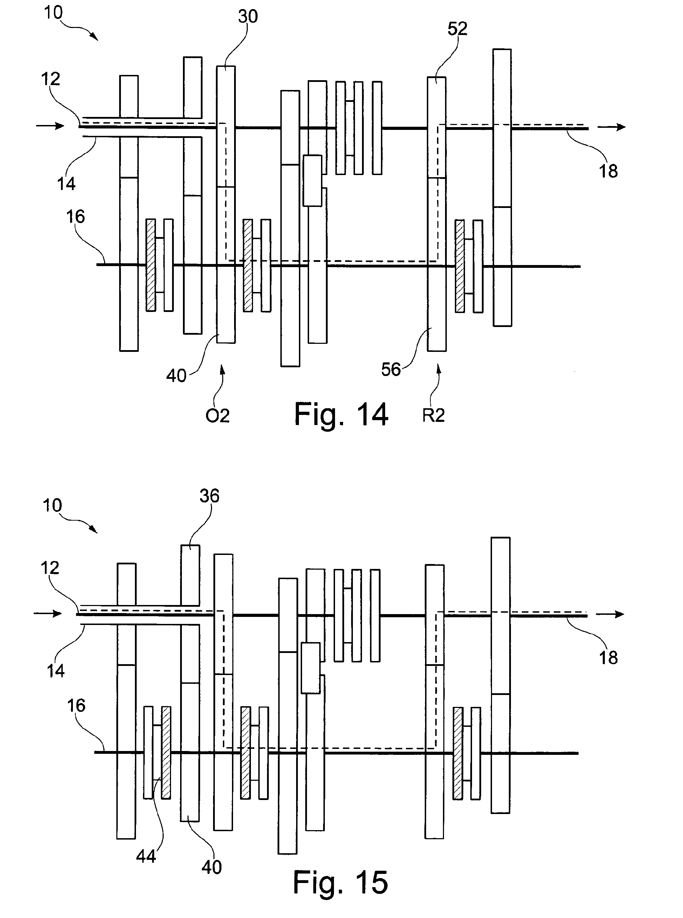

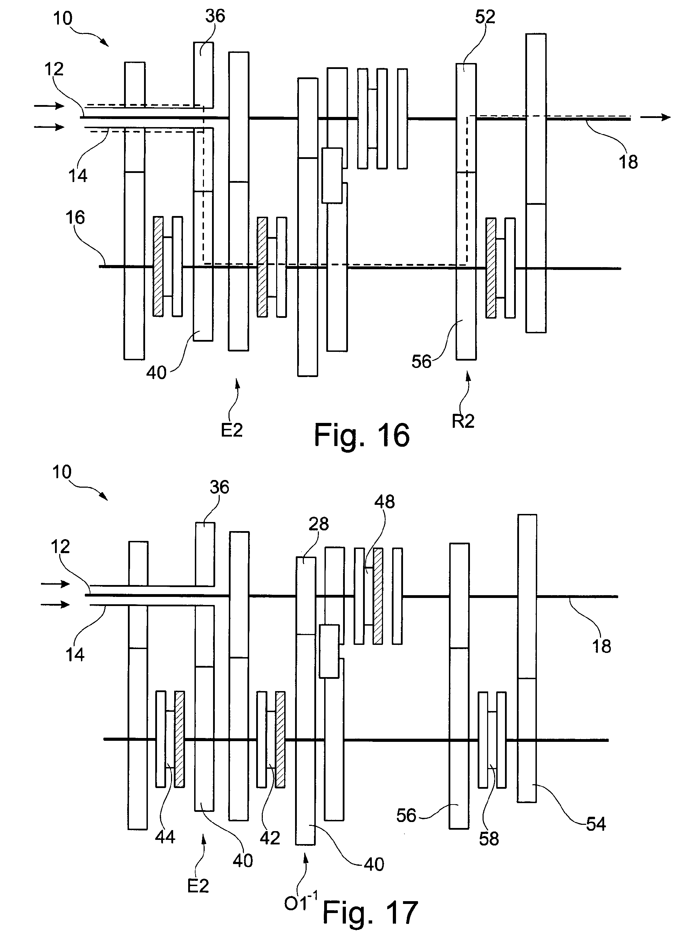

The Figures 13 to 16 show the transmission 10 running in the seventh gear and the eighth gear (Fig. 14, Fig. 16, respectively) and the state of the transmission 10 prior to changing the torque input from one input shaft to the other input shaft in order to shift into the seventh or eighth gear (Fig. 13, Fig. 15, respectively). The necessary steps correspond to the steps prior to shifting into the third and fourth gear, respectively. However, the seventh gear is a combination of the transmission ratios 02 and R2, and the eighth gear a combination of the transmission ratios E2 and R2.

Shifting the first eight gears is possible without interrupting the torque transmission to the output shaft 18 and therefore to the driving wheels, because of two reasons. Firstly the change of input torque from the first input shaft 12 to the second input shaft 14 and vice versa does not call for an interruption in torque transmission. Secondly, the engagement and disengagement of the gear wheels is done on gear wheels which are connected to the input shaft currently not part of the power flow. The fifth gear is an exception to the rule but essential, as it allows the use of the two range transmission ratios 64. This is due to the fact that in the fifth gear, the auxiliary shaft 16 is taken out of the torque transmission path. Thus, the transmission 10 is able to shift through the first eight gears without torque interruption to the driving wheels.

In order to shift into the ninth gear, however, the torque transmission to the output shaft 18 has to be interrupted, as shown in Figure 17. The range selection coupling 58 is disengaged from both of the range gear wheels 54 and 56, and the drive-through coupling 48 is engaged with the output shaft 18, drivingly connecting the first input shaft 12 with the output shaft 18. Coupling 44 is left in engagement with the follower gear wheel 40 meshing with the gear wheel 36, providing the transmission ratio E2 between the second input shaft 14 and the auxiliary shaft 16. Coupling 42 is engaged with the follower gear wheel 40 associated with the gear wheel 28 in order to provide inverse transmission ratio O1⁻¹ between the auxiliary shaft 16 and the output shaft 18 via the first input shaft 12.

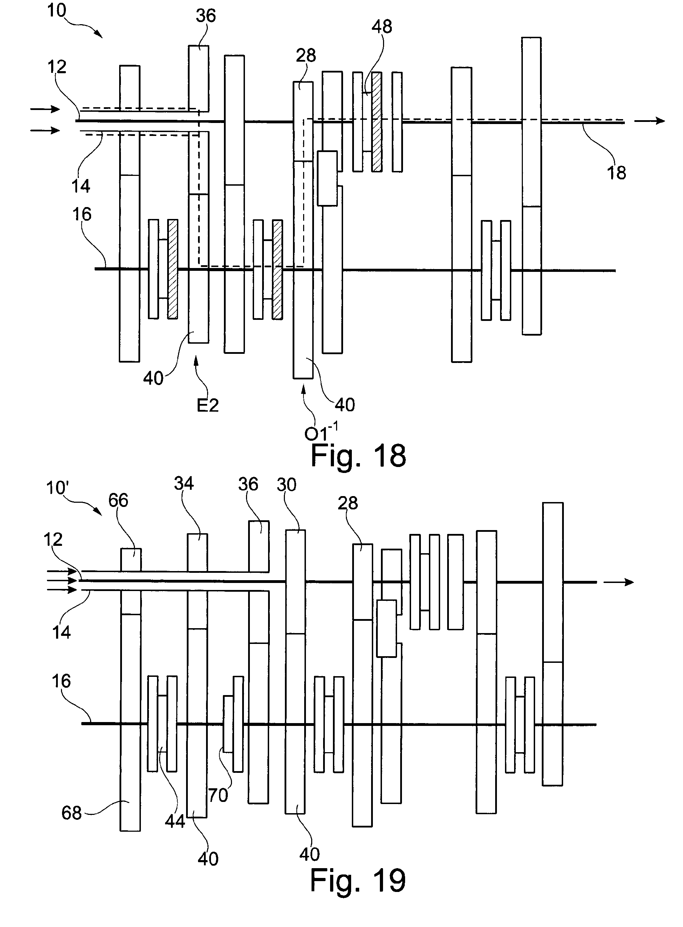

Figure 18 shows the transmission 10 in the ninth gear. The second input shaft 14 is driven, transmitting torque to the auxiliary shaft 16 via the gear wheel 36 and its associated follower gear wheel 40. Through the follower gear wheel 40 meshing with gear wheel 28 the torque is transmitted to the first input shaft 12 which is drivingly connected to the output shaft 18 via the drive-through coupling 48. Thus, the ninth gear is a combination of the transmission ratio E2 and the inverse transmission ratio O1⁻¹.

Figure 19 shows a second embodiment of the invention. Parts with the same function as in the first embodiment are assigned the same reference numeral as in the first embodiment, and their function is not explained again.

In order to arrive at the second embodiment, the transmission 10 of Figure 1 has been provided with two additional gears. This is done by adding an additional gear wheel 66 on the second input shaft 14 with an associated follower gear wheel 68 on a bearing on the auxiliary shaft 16. Preferably, the diameter of the additional gear wheel 66 is smaller than the diameters of any of the gear wheels 28, 30, 34, 36.

Further, an additional single-sided coupling 70 is necessary on the auxiliary shaft 16. The additional coupling 70 has not necessarily to be arranged with the additional follower gear wheel 68, but can also be arranged with another follower gear wheel 40 associated with the second set of gear wheels 38, as long as the coupling 44 is arranged between the additional follower gear wheel 68 and the adjacent follower gear wheel 40. This setup is shown in Figure 19.

The additional pair of gear wheels comprising gear wheel 66 and follower gear wheel 68 provides a transmission ratio used for the first and seventh gear. The shifting sequence of the transmission 10' is analogue to the shifting sequence described above but in this embodiment there is no necessity to interrupt the torque before shifting into the last (eleventh) gear.

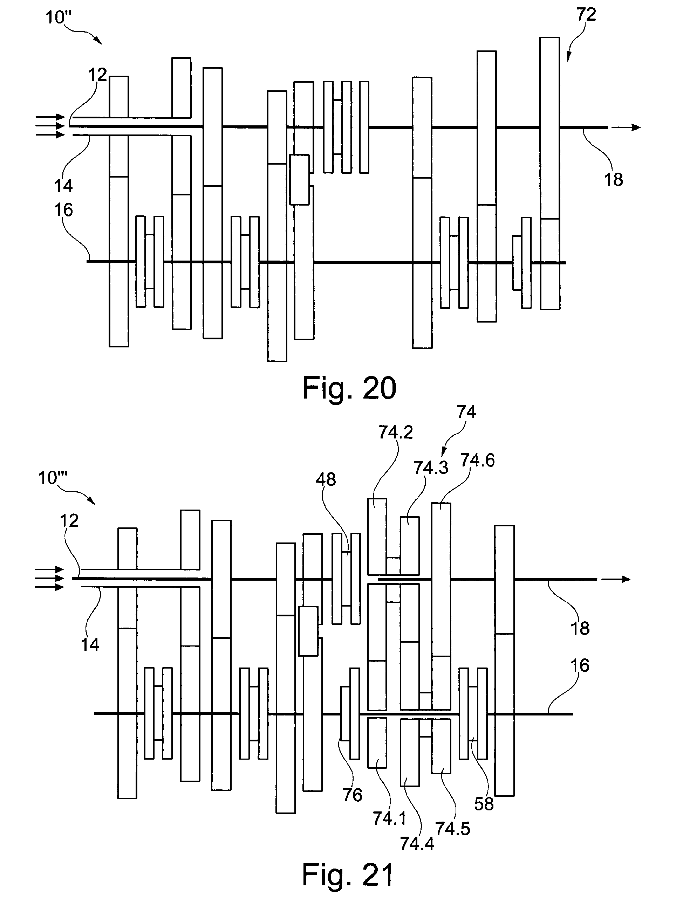

Figure 20 shows a third embodiment of the invention. In this transmission 10" three pairs of range gear wheels are present in order to provide additional gears. In case of a transmission for off-road vehicles, the additional pair of range gear wheels 72 has a very short transmission ratio from the auxiliary shaft 16 to the output shaft 18. This results in the availability of a set of off-road gears including a short reverse gear. The shift between these off-road gears and the gears for normal driving is not intended to be a shift without torque transmission interruption. The short interruption in the drive to the wheels informs the driver that the vehicle has shifted between the off-road gears and the normal gears.

In a fourth embodiment of the invention, shown in Figure 21, the spread of the total transmission ratio between the first and the last gear in the transmission 10"' is increased. This is achieved by replacing the pair of range gear wheels 50, 54 with a two-step reduction gear wheel set 74. Further, an additional coupling 76 has been added. The two-step reduction gear wheel set comprises six gear wheels 74.1 to 74.6. Gear wheels 74.1, 74.3 and 74.5 are arranged on a bearing on the auxiliary shaft 16, and the gear wheel 74.2 and 74.4 are arranged on a bearing on output shaft 18. Gear wheel 74.6 is arranged on output shaft 18 as well but drivingly connected thereto. Furthermore, gear wheels 74.2 and 74.3, as well as gear wheels 74.4 and 74.5 are drivingly connected with each other. The two-step reduction gear wheel set is arranged on the output shaft 18 in a manner that the drive-through coupling 48 is able to engage with gear wheel 74.2. Additionally, the range selection coupling 58 is able to engage with gear wheel 74.5 and the additional coupling 76 is arranged to be able to engage with gear wheel 74.1.

With this setup, three range transmission ratios 64 are possible, as well a driving connection between the second input shaft 14 and the output shaft 18 which is not a direct transmission but rather provides a short transmission ratio.

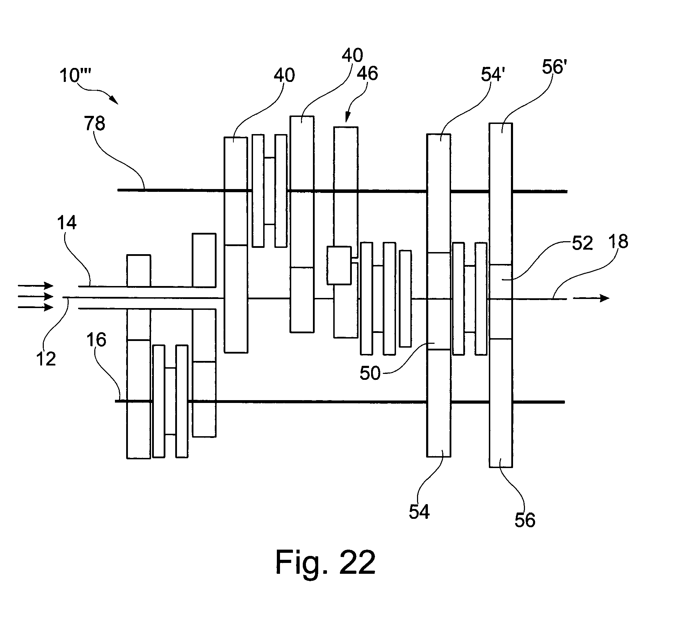

A fifth embodiment of the invention can be seen in Figure 22. The transmission 10"" is constructed as a three-shaft transmission. A second auxiliary shaft 78 is provided with follower gear wheels 40 being arranged on the second auxiliary shaft 78 and range gear wheels 54', 56' corresponding to range gear wheels 54, 56 and meshing with range gear wheels 50, 52, respectively. For example, in this layout the follower gear wheels 40 of the first set of gear wheels 32 as well as one of the gear wheels of the set of reverse gear wheels 46 are arranged on the second auxiliary shaft 78.

## Claims

1. A dual clutch transmission (10) having a first input shaft (12), a second input shaft (14), an output shaft (18) and at least one auxiliary shaft (16), a first set of gear wheels (32) being arranged on the first input shaft (12) and a second set of gear wheels (38) being arranged on the second input shaft (14), the gear wheels (28, 30, 34, 36) of the first and second sets meshing with gear wheels on the auxiliary shaft (16) such that a set of odd transmission ratios (60) is formed with the gear wheels (28, 30) arranged on the first input shaft (12) and a set of even transmission ratios (62) is formed with the gear wheels (34, 36) arranged on the second input shaft (14), **characterized in that** the auxiliary shaft (16) is provided with at least two range gear wheels (54, 56) which mesh with range gear wheels (50, 52) arranged on the output shaft (18), and **in that** a drive-through coupling (48) is provided between one of the input shafts (12, 14) and the output shaft (18).

2. The transmission of claim 1 wherein the gear wheels (28, 30, 34, 36) on the first and second input shafts (12, 14) are fixedly connected thereto and the gear wheels meshing therewith are arranged as follower gear wheels (40) which can be drivingly connected to the auxiliary shaft (16) by means of a coupling (42, 44).

3. The transmission of claim 1 or claim 2 wherein a coupling (42) is provided for drivingly connecting at least one of the gear wheels (28, 30) of the odd transmission ratios (60) to the auxiliary shaft (16), and a further coupling (44) is provided for drivingly connecting at least one of the gear wheels (34, 36) of the even transmission ratios (62) to the auxiliary shaft (16).

4. The transmission of claim 3 wherein the couplings (42, 44, 48) are formed as synchronizing devices.

5. The transmission of claim 4 wherein at least one of the synchronizing devices is a double-sided synchronizing device.

6. The transmission of claim 4 wherein at least one of the synchronizing devices is a single-sided synchronizing device.

7. The transmission of any of claims 1 to 3 wherein the couplings (42, 44, 48) are formed as a dog clutch.

8. The transmission of any of the preceding claims wherein a range selection coupling (58) is provided for drivingly connecting at least one of the range gear wheels (50, 52, 54, 56) to the respective shaft.

9. The transmission of claim 8 wherein the range selection coupling (58) is arranged on the auxiliary shaft (16).

10. The transmission of claim 8 or claim 9 wherein the range selection coupling (58) is a double-sided synchronizing device.

11. The transmission of any of the preceding claims wherein a set of reverse gear wheels is provided.

12. The transmission of claim 11 wherein one gear wheel of the set of reverse gear wheels (46) is arranged on one of the input shafts (12, 14), and a second gear wheel of the set of reverse gear wheels (46) is arranged on the auxiliary shaft (16).

13. The transmission of claim 11 wherein one gear wheel of the set of reverse gear wheels (46) is arranged on the output shaft (18), and a second gear wheel of the set of reverse gear wheels (46) is arranged on the auxiliary shaft (16).

14. The transmission of any of the preceding claims wherein one of the range gear wheels (50, 52, 54, 56) features a two-step reduction gear wheel set (74).

15. The transmission of claim 14 wherein the drive-through coupling (48) is able to engage with the two-step reduction gear wheel set (74).

16. The transmission of any of the preceding claims wherein a second auxiliary shaft (78) is provided carrying at least one gear wheel of the odd or even transmission ratios (62, 64).

17. The transmission of claim 16, wherein one of the auxiliary shafts (16, 78) carries the gear wheels of the odd transmission ratios (60) and the other of the auxiliary shafts carries the gear wheels of the even transmission ratios (62).
